## Europäisches Patentamt
## European Patent Office
## Office européen des brevets

(19)

(11) Numéro de publication: **0 261 041 B1**

(12) # FASCICULE DE BREVET EUROPEEN

(45) Date de publication du fascicule du brevet:
14.11.90

(51) Int. Cl.⁵: **A61C 13/225**

(21) Numéro de dépôt: **87420239.3**

(22) Date de dépôt: **15.09.87**

(54) Dispositif de rétention magnétique d'un prothèse dentaire amovible.

(30) Priorité: **15.09.86 FR 8613293**

(43) Date de publication de la demande:
**23.03.88 Bulletin 88/12**

(45) Mention de la délivrance du brevet:
**14.11.90 Bulletin 90/46**

(84) Etats contractants désignés:
**AT BE CH DE ES GB GR IT LI LU NL SE**

(56) Documents cités:
**US-A- 4 431 419**

(73) Titulaire: **Garrel, André, Avenue de la Clastre,
F-34980 Saint Clement la Rivière(FR)**
Titulaire: **Vallat, Yves, 339 avenue Paul Parguel,
F-34000 Montpellier(FR)**
Titulaire: **Bousquet, Frédéric, 12 Résidence du
Rond-Point d'Assas, F-34000 Montpellier(FR)**
Titulaire: **Verdier, Jean-Louis, Le Parc des
Roses, Bâtiment C4 23 avenue Saint Lazare,
F-34000 Montpellier(FR)**

(72) Inventeur: **Garrel, André, Avenue de la Clastre,
F-34980 Saint Clement la Rivière(FR)**
Inventeur: **Vallat, Yves, 339 avenue Paul Parguel,
F-34000 Montpellier(FR)**
Inventeur: **Bousquet, Frédéric, 12 Résidence du
Rond-Point d'Assas, F-34000 Montpellier(FR)**
Inventeur: **Verdier, Jean-Louis, Le Parc des
Roses, Bâtiment C4 23 avenue Saint Lazare,
F-34000 Montpellier(FR)**

(74) Mandataire: **Maureau, Philippe et al, Cabinet Germain &
Maureau Le Britannia - Tour C 20, bld Eugène Déruelle
Boîte Postale 3011, F-69392 Lyon Cédex 03(FR)**

ACTORUM AG

## Description

La présente invention se rapporte à un dispositif de rétention par forces électromagnétiques d'une prothèse dentaire amovible, ou dentier.

On connaît des dispositifs de rétention magnétique d'une prothèse dentaire amovible, comportant au moins un aimant permanent ou calotte ferromagnétique implanté(e) dans la mandibule ou les maxillaires et coopérant en attraction ou répulsion magnétique avec au moins un aimant permanent implanté dans la prothèse et enrobé de matériaux étanches aux produits salivaires. L'aimant implanté dans la prothèse est partiellement entouré d'un matériau ferromagnétique biocompatible et inoxydable par les produits salivaires, de manière à créer, avec la calotte ou aimant associé, un circuit magnétique fermé. La face de cet aimant regardant vers la calotte ou aimant associé est au moins partiellement non recouverte du matériau ferromagnétique, un espace étant ménagé entre cette face et la calotte ou aimant associé et étant rempli d'un produit, non ferromagnétique, d'étanchéité par rapport au produit salivaire, telle qu'un résine acrylique (voir US-A 4 431 419).

Cette couche de résine, qui sert à s'opposer aux infiltrations de produits salivaires vers l'aimant, ne remplit efficacement son rôle que si son épaisseur est au moins égale à 3mm environ. L'entrefer alors créé est trop important pour que l'on obtienne encore une force de rétention magnétique suffisante. On est alors conduit en pratique à diminuer l'épaisseur de la couche de résine, ce qui diminue d'autant l'entrefer, mais rend cette couche de résine moins imperméable aux produits salivaires. L'infiltration de produits salivaires entraîne une corrosion de l'aimant et provoque même dans certain cas un décollement de la couche de résine. Par ailleurs, les résines utilisées résistent mal au frottement contre la calotte, qui se produit toujours en pratique lors de la mastication. Ce frottement entraîne une usure de la couche de résine, aggravée par le fait qu'il s'interpose souvent des débris alimentaires entre la résine et la calotte. Cette usure diminue encore l'épaisseur de la couche, et favorise d'autant l'infiltration de salive.

Enfin, quoiqu'il en soit, cette couche protectrice en matériau non ferromagnétique crée toujours un entrefer qui affecte nécessairement l'efficacité de la rétention magnétique.

L'invention vise à remédier au mieux à ces inconvénients. Elle se rapporte à un dispositif de rétention magnétique d'une prothèse dentaire amovible, comportant au moins un aimant permanent ou calotte ferroma gnétique implanté(e) dans la mandibule ou les maxillaires et coopérant en attraction ou répulsion magnétique avec au moins un aimant permanent implanté dans la prothèse et enrobé de matériaux étanches aux produits salivaires, cet aimant étant partiellement entouré d'un matériau ferromagnétique biocompatible et inoxydable par les produits salivaires, de manière à créer, avec la calotte ou aimant associé, un circuit magnétique fermé, un espace étant ménagé entre la face de cet aimant, regardant vers la calotte ou aimant associé, et cette calotte ou aimant associé, ce dispositif étant caractérisé en ce que cet espace contient une feuille en matériau magnétique aimanté de manière permanente dans le même sens que l'aimant implanté dans la prothèse, cette feuille recouvrant ladite face, et étant implanté de manière à assurer l'étanchéité de cet aimant par rapport au produit salivaire.

L'invention sera bien comprise, et tous ses avantages ainsi que d'autres caractéristiques ressortiront, au cours de la description suivante de quelques exemples non limitatifs de réalisation, en référence aux dessins schématiques annexés dans lesquels :

Figure 1 est une vue d'ensemble en perspective d'une prothèse dentaire amovible retenue sur deux racines de dents-supports par ce dispositif de rétention magnétique.

Figure 2 est une vue en coupe partielle selon la direction II-II de la figure 1,

Figure 3 est une vue agrandie de la partie du dispositif qui est implantée dans la prothèse,

Figures 4 à 14 sont des vues semblables à celle de la figure 3 et montrant dix variantes de réalisation de la partie de ce dispositif qui est implantée dans la prothèse.

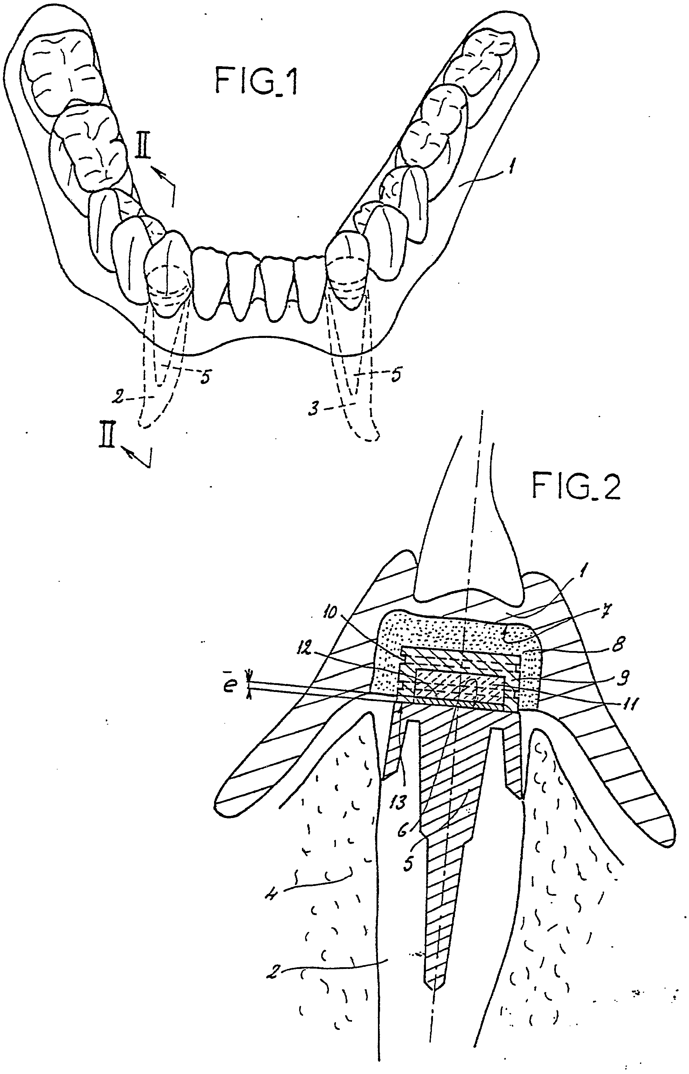

En se reportant tout d'abord aux figures 1 et 2, la référence 1 désigne une prothèse dentaire amovible, ou dentier, en place à l'aide du dispositif de rétention sur une mâchoire 4 comportant deux racines de dents-supports 2 et 3.

Dans chaque racine telle que la racine 2 est implanté un insert métallique 5 formant calotte, dont la partie supérieure vient coiffer la racine 2 et présente une surface supérieure 6 horizontale et rigoureusement plane. L'insert est en matériau ferromagnétique inoxydable, par exemple en un acier inoxydable Fer-Chrome chargé en Chrome dans une proportion comprise entre 12 et 22 %, tel que l'acier F 17 comportant 17 % de Chrome, 82,9 % de Fer et 0,06 % de Carbone.

Vis à vis de chaque racine, telle que la racine 2, est aménagée dans la prothèse 1, à l'intrados de celle-ci, une cavité 7 dans laquelle on trouve successivement, de l'intérieur vers l'extérieur :
- une zone de déformation 8 remplie d'un matériau élastique et bio-compatible, tel que du silicone, adhérant à la paroi de la cavité 7 sur laquelle il est fixé par collage, ou autre,
- un conteneur 9 en forme de boîtier circulaire ouvert vers la calotte 5, en matériau ferromagnétique identique à celui utilisé pour l'insert ; le boîtier ferromagnétique 9 est retenu dans la masse élastique bio-compatible 8 par des gorges circulaires 10,
- un aimant permanent 11 en forme de cylindre circulaire venant s'encastrer étroitement dans le fond du boîtier 9 ; l'aimant 11, une fois installé dans le boîtier 9, y est retenu solidement par les forces électromagnétiques,
- un autre aimant permanent 12 en forme de disque plat et mince recouvrant l'aimant 11 seul en remplissant le faible espace e, de l'ordre de 0,2mm par exemple, laissé entre l'aimant et la face ouverte vers le bas du boîtier 9.

L'aimant permanent 12 est constitué par une mince feuille pré-aimantée dans le même sens que l'aimant 11. Cette feuille est en un matériau magnétique résistant à la corrosion par les produits salivaires, tel qu'un acier magnétique Fer-Chrome-Cobalt. Ce matériau a en outre de bonnes qualités mécaniques de résistances à l'usure. Il a par contre de moins bonnes qualités de rétention magnétique que l'aimant 11, qui est par exemple constitué par une matière plastique comportant des inclusions de particules magnétiques. Cet aimant 12 crée néanmoins un flux magnétique de même sens que celui créé par l'aimant principal 11.

Le boîtier 9 est posé en contact étroit sur la surface supérieure plane 6 de la calotte 5. Il crée avec celle-ci un circuit magnétique à réluctance faible, canalisant les lignes de forces du champ créé par les aimants 11 et 12, de sorte que la quasi-totalité de celles-ci passent à travers la face annulaire 13 constituant le bas du boîtier 9, face qui est plane et en contact étroit avec la face supérieure 6 de la calotte 5. Le boîtier 9 est par suite solidement plaqué par les forces électromagnétiques contre la face plane 6 de la calotte 5.

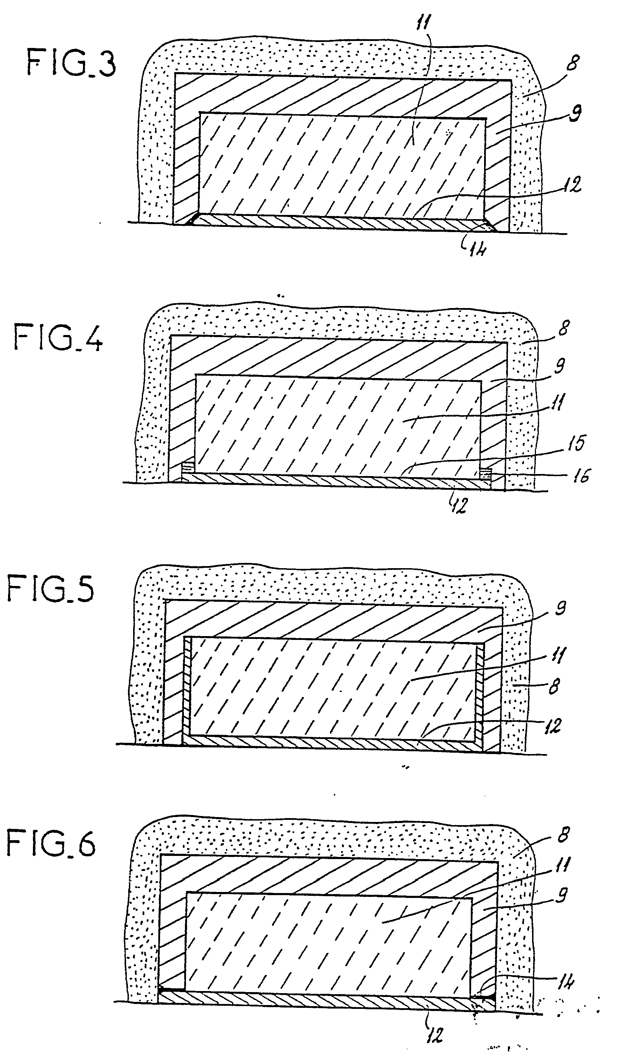

Afin d'assurer une étanchéité totale de l'aimant 11 par rapport aux produits salivaires, il est préférable, comme représenté sur la figure 3, de coller ou de souder en 14 la bordure du disque 12 contre le boîtier 9. Le collage peut être effectué au moyen d'une colle dentaire, ou d'une colle métal-sur-métal du commerce. Le soudage est préférentiellement effectué par une soudure métal-sur-métal, avantageusement au laser, ou par points, ou par bombardement ionique pour éviter de chauffer l'aimant 12 et d'arriver alors au point de Curie. On évitera si possible le brasage qui introduirait un bi-métallisme dans la bouche : on sait, que dans ce cas, des effets de pile sont à craindre, la salive servant d'électrolyte.

On peut bien entendu coller toute la surface du disque aimanté 12 contre celle de l'aimant 11, pour assurer une meilleure adhésion, mais on s'abstient de le faire en général, car les forces d'attraction magnétique sont en général suffisantes pour plaquer le disque aimanté 12 contre l'aimant 11 : on évite ainsi de créer un entrefer qui serait dû à l'épaisseur de colle.

La réalisation de la figure 4 se différencie de celle de la figure 3 par le fait que la face 15 du disque aimanté 12 qui est plaquée contre l'aimant 11 est plus large que celui-ci, un joint annulaire d'étanchéité 16 étant par ailleurs interposé entre le disque 12 et le boîtier 9, afin de protéger encore mieux l'aimant 11 contre les infiltrations de salive. Le joint 16 est par exemple un joint souple en caoutchouc.

Dans la réalisation de la figure 5, l'aimant auxiliaire 12 a une forme de coupelle qui vient s'emmancher à force autour de laimant principal 11 et à l'intérieur du boîtier 9. Cette forme de réalisation donne une meilleure facilité de montage en série. La feuille remplissant l'entrefer est constituée alors par le fond de cette coupelle.

Pour la réalisation de la figure 6, le disque aimanté 12 est aussi large que le boîtier 9, et il est soudé en 14 sur le pourtour extérieur du boîtier. Le cordon de soudure 14 n'est alors plus du tout en contact avec le milieu salivaire, puisqu'il est pris dans l'épaisseur de la résine 8 de la prothèse. On a ainsi une sécurité supplémentaire contre le risque d'infiltration de salive vers l'aimant 11.

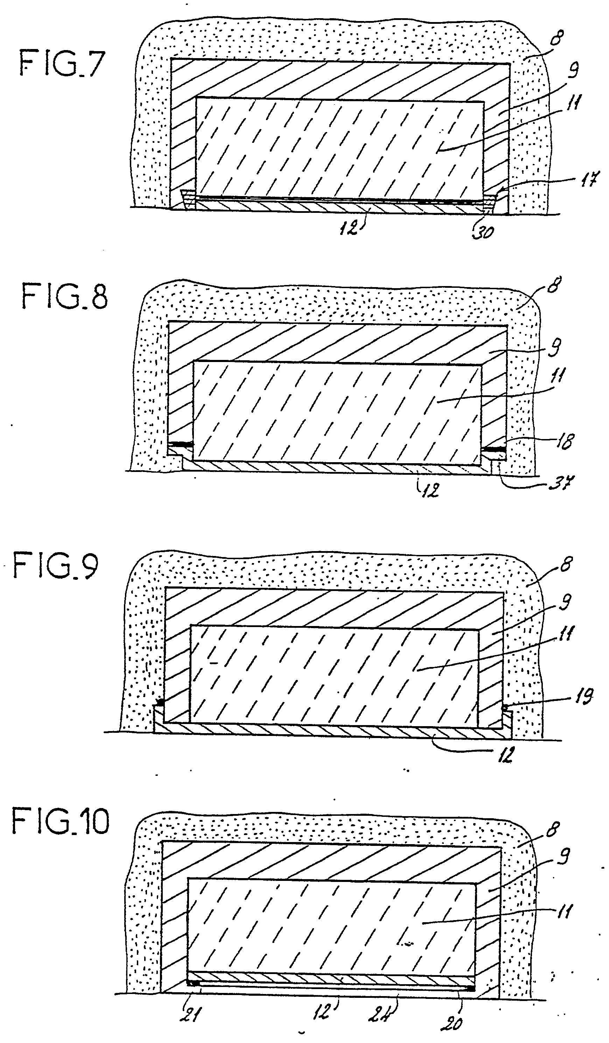

Selon la figure 7, le disque 12 est collé contre l'aimant 11, tandis qu'un décrochement annulaire 17 est pratiqué dans la partie interne inférieure du boîtier 9. L'espace, d'une largeur et d'une épaisseur de l'ordre de 3 mm au moins, laissé par le décrochement 17 est rempli d'une résine d'étanchéité 30, telle qu'une résine acrylique. Cet anneau de résine 30 est d'épaisseur suffisante pour s'opposer aux infiltrations de salive.

Sur la figure 8, la bordure du boîtier 9 est en retrait dans le matériau 8 par rapport à la face inférieure de l'aimant 11, tandis que l'aimant laminaire a une forme d'assiette creuse dont le pourtour 37 est de même largeur que le boîtier 9, et vient se plaquer contre le pourtour de ce boîtier, avec interposition éventuelle d'une rondelle de colle 18, ou soudure. La jonction entre l'aimant laminaire 12 et le boîtier 9 est dans ce cas totalement englobée dans la masse biocompatible 8, et donc totalement à l'abri de la salive.

Selon la variante de la figure 9, l'aimant laminaire 12 a une forme de coupelle dans laquelle le boîtier 9 vient s'emmancher étroitement. Un cordon de colle 19, ou soudure, vient facultativement garantir la cohésion et l'étanchéité du montage, mais de toutes façons, la liaison en 19 entre l'aimant 12 et le boîtier 9 est là aussi englobée dans la masse 8.

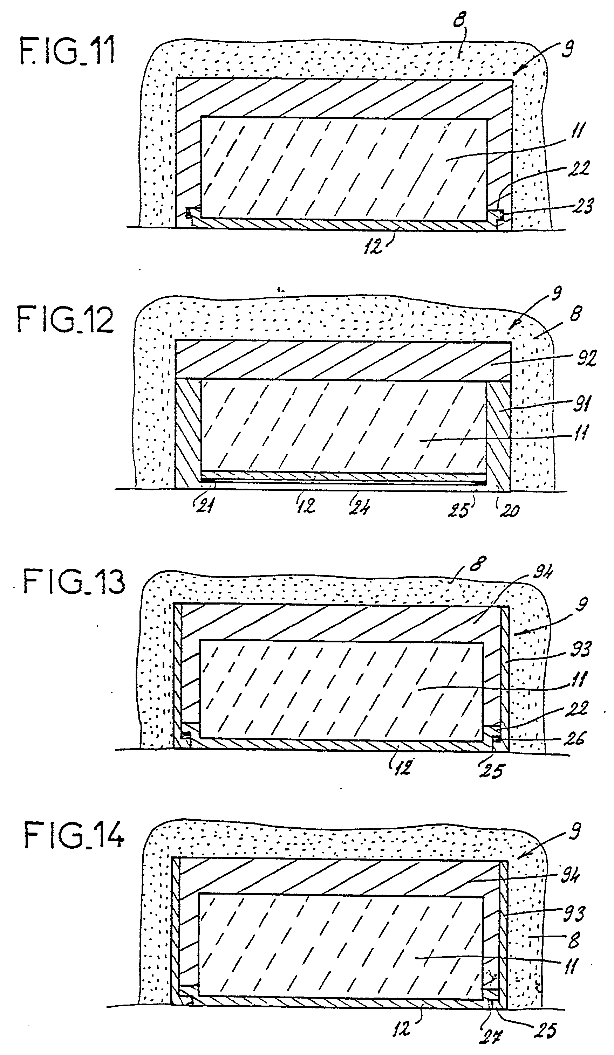

Selon la figure 10, la bordure inférieure 20 du boîtier 9 est rabattue par sertissage sur l'aimant laminé 12, avec interposition d'un joint d'étanchéité 21. On améliore ainsi la cohésion mécanique de l'ensemble. Si l'on désire, pour cette réalisation, éviter de créer un petit entrefer en 24, on utilise, comme représenté figure 11, un aimant laminaire 12 dont la bordure présente un décolletage 22 qui reçoit, après interposition d'un joint 23, le sertissage du boîtier 9.

La solution de la figure 12 aboutit au même résultat que celle de la figure 10,, mais évite le sertissage. On part dans ce cas d'un boîtier 9 dont la bordure inférieure 20 présente déjà un épaulement centripète 25, réalisé par usinage au autre moyen. Le boîtier 9 n'est dans ce cas pas d'une seule pièce, mais est constitué d'une virole 91 et d'un couvercle 92, en forme de disque plat, qui constitue une plaque de fond. Pour réaliser le montage, on introduit successivement dans la virole 91, le joint d'étanchéité 21, l'aimant laminaire 12, l'aimant principal 11, puis on ferme l'ensemble par la plaque de fond 92 (que l'on colle éventuellement). Le joint d'étanchéité 21 peut être remplacé par une soudure entre la virole 91 et l'aimant laminaire 12, laquelle soudure peut être obtenue par laser par points ou par bombardement ionique.

Les solutions des figures 13 et 14 sont assez proches de celle de la figure 12, mais évitent la création d'un entrefer 24 (figures 10 et 12). Dans ce cas, le boîtier 9 est composé d'une virole préformée 93, plus mince que la virole 91, présentant un épaulement inférieur centripète 25, et d'une coupelle 94, qui vient s'emmancher étroitement dans la virole 93. Dans les deux cas, l'aimant laminaire 12 est de même forme que celui de la figure 11, avec décolletage 22. Les réalisations des figures 13 et 14 ne diffèrent entre elles que par la position du joint d'étanchéité, 26 et 27 respectivement, qui est dans le premier cas placé entre le décolletage 22 et la face interne de l'épaulement 25, et dans l'autre cas entre l'aimant laminaire 12 et la face intérieure verticale de l'épaulement 25.

L'invention n'est bien évidemment pas limitée aux exemples de réalisation qui viennent d'être décrits. Elle s'applique à toutes les autres formes d'aimants 11 possibles, et en particulier à celles selon la demande de brevet français n° 85.14 977 (FR-A 2 587 895) déposée par les demandeurs sous le titre : "Dispositif de rétention magnétique d'une prothèse dentaire amovible", où l'aimant principal a une forme de parallélépipède. En évitant dans ce cas la présence d'une épaisse couche de résine sur plusieurs faces du parallélépipède, on réduit le volume de celui-ci, ce qui facilite la réalisation de nombreuses prothèses.

**Revendications**

1. Dispositif de rétention magnétique d'une prothèse dentaire amovible, comportant au moins un premier aimant permanent (5) ou calotte ferromagnétique (5) implanté(e) dans la mandibule (2,3,4) ou les maxillaires et coopérant en attraction ou répulsion magnétique avec au moins un second aimant permanent (11) implanté dans la prothèse et enrobé de matériaux (8) étanches aux produits salivaires, cet second permant (11) aimant étant partiellement entouré d'un matériau ferromagnétique biocompatible et inoxydable par les produits salivaires, de manière à créer, avec la calotte (5) ou premier aimant associé, un circuit magnétique fermé; un espace (e) étant ménagé entre la face de cet second aimant, regardant vers la calotte (5) ou aimant associé, et contenant une feuille, cette feuille (12) recouvrant ladite face, et étant implantée de manière à assurer l'étanchéité de cet aimant (11) par rapport au produit salivaire et cette calotte (5) ou premier aimant associé, caractérisé en ce que la feuille (12) est en matériau magnétique aimanté de manière permanente dans le même sens que l'aimant (11) implanté dans la prothèse.

2. Dispositif de rétention magnétique selon la revendication 1, caractérisé en ce que la feuille aimantée (12) a une forme de disque plat dont au moins la bordure (14) est collée ou soudée au boîtier en matériau ferromagnétique (9) contenant l'aimant (11) implanté dans la prothèse.

3. Dispositif selon la revendication 1 ou la revendication 2, caractérisé en ce que la bordure de la feuille aimantée (12) est soudée par une soudure (14) métal-métal sans chauffage.

4. Dispositif selon l'une des revendications 1 à 3, caractérisé en ce que l'étanchéité est réalisée par un élément étanche (joint 16, colle 18, résine 17, soudure 19), qui est situé entre la bordure (37,22) de la feuille aimantée et le boîtier ferromagnétique (9) contenant l'aimant (11) de manière à être englobé dans le matériau (8) étanche aux produits salivaires qui contient l'aimant (11) et son boîtier ferromagnétique (9).

5. Dispositif de rétention magnétique selon la revendication 1, caractérisé en ce que la feuille aimantée (12) constitue le fond d'une coupelle qui vient s'emmancher autour de l'aimant (11) et dans son boîtier ferromagnétique (9).

6. Dispositif de rétention magnétique selon la revendication 1, caractérisé en ce que la feuille aimantée (12) est retenue dans le boîtier ferromagnétique (9) contenant l'aimant (11) par un épaulement centripète (25) de ce boîtier (9).

7. Dispositif selon la revendication 6, caractérisé en ce que l'épaulement centripète (25) est un sertissage.

8. Dispositif selon la revendication 7, caractérisé en ce que l'épaulement centripète (25) est préformé, et en ce que le boîtier ferromagnétique (9) est constitué d'une virole (91,93) et d'un couvercle de fermeture (92,94).

**Patentansprüche**

1. Magnetische Retentionsvorrichtung für herausnehmbare dentale Prothesen, mit wenigstens einem ersten Permanentmagneten (5) oder einer ferromagnetischen Krone (5), der oder die im Kinnbacken (2, 3, 4) oder im Kiefer implantiert ist und durch magnetische Anziehung oder Abstoßung mit wenigstens einem zweiten Permanentmagneten (11) zusammenwirkt, der in der Prothese implantiert ist und von gegenüber Speichelprodukten dichtenden Materialien (8) umhüllt ist, wobei dieser zweite Permanentmagnet (11) teilweise von einem ferromagnetischen, bioverträglichen und nicht durch Speichelprodukte oxidierbaren Material umgeben ist, so daß mit der Krone (5) oder dem strukturell ähnlichen ersten Magneten ein geschlossener Magnetkreis erzeugt wird, wobei zwischen der zur Krone (5) oder zum strukturell ähnlichen Magneten hin weisenden Seite dieses zweiten Magneten und dieser Krone (5) oder dem strukturell ähnlichen ersten Magneten ein Zwischenraum (e) vorgesehen ist, der ein Plättchen enthält, das die genannte Seite überdeckt und so eingesetzt ist, daß die Dichtheit dieses Magneten (11) hinsichtlich Speichelprodukten gewährleistet ist, dadurch gekennzeichnet, daß das Plättchen (12) aus magnetischem Material besteht und im gleichen Sinne permanentmagnetisiert ist wie der in der Prothese implantierte Magnet (11).

2. Magnetische Retentionsvorrichtung nach Anspruch 1, dadurch gekennzeichnet, daß das magnetisierte Plättchen (12) die Form einer flachen Scheibe aufweist, von der wenigstens der Rand (14) mit dem Gehäuse (9) aus ferromagnetischem Material verklebt, verlötet oder verschweißt ist, das den in der Prothese implantierten Magneten (11) enthält.

3. Magnetische Retentionsvorrichtung nach Anspruch 1 oder 2, dadurch gekennzeichnet, daß der Rand des magnetisierten Plättchens (12) durch eine Metall-Metall-Schweißnaht (14) bzw. -Lötung oder Erhitzen verschweißt bzw. verlötet ist.

4. Magnetische Retentionvorrichtung nach einem der Ansprüche 1 bis 3, dadurch gekennzeichnet, daß die Abdichtung durch ein Dichtelement (Dichtung 16, Klebstoff 18, Harz 17, Schweiß- bzw. Lötnaht 19) realisiert ist, das zwischen dem Rand (37, 22) des magnetischen Plättchens und dem ferromagnetischen Gehäuse (9) angeordnet ist, das den Magneten (11) so aufnimmt, daß er von gegenüber Speichelprodukten abdichtendem Material (8) umhüllt ist, das den Magneten (11) und sein ferromagnetisches Gehäuse (9) enthält.

5. Magnetische Retentionsvorrichtung nach Anspruch 1, dadurch gekennzeichnet, daß das magnetisierte Plättchen (12) den Boden einer Napfform bildet, die sich um den Magneten (11) herum und in dessen ferromagnetisches Gehäuse haltend erstreckt.

6. Magnetische Retentionsvorrichtung nach Anspruch 1, dadurch gekennzeichnet, daß das magnetisierte Plättchen (12) in dem ferromagnetischen Gehäuse (9) gehalten wird, das den Magneten (11) durch einen nach innen weisenden Bund (25) dieses Gehäuses (9) umfaßt.

7. Magnetische Retentionsvorrichtung nach Anspruch 6, dadurch gekennzeichnet, daß dieser nach innen weisende Bund (25) als Bördelung ausgebildet ist.

9. Magnetische Retentionsvorrichtung nach Anspruch 7, dadurch gekennzeichnet, daß dieser nach innen weisende Bund (25) vorgeformt ist, und daß das ferromagnetische Gehäuse (9) durch einen Ring (91, 93) und einen Abschlußdeckel (92, 94) gebildet wird.

**Claims**

1. Magnetic retaining device for a removable dental prosthesis, having at least one first permanent magnet (5) or ferromagnetic cap implanted in the mandible (2, 3, 4) or the jawbones arid interacting by magnetic attraction or repulsion with at least one second permanent magnet (11) implanted in the prosthesis and coated with materials (8) which are impervious to saliva, this second permanent magnet (11) being partially surrounded by a ferromagnetic material which is biocompatible and inoxydable in relation to saliva, so as to create, in conjunction with the cap (5) or first associated magnet, a closed magnetic circuit; a space (e) being provided between the surface of this second magnet facing the cap (5) or associated magnet and containing a foil, this foil (12) being implanted so as to ensure the impermeability of this magnet in relation to saliva, and this cap (5) or first associated magnet, characterized in that the foil (12) is made of magnetic material permanently magnetized in the same direction as the magnet (11) implanted in the prosthesis.

2. Magnetic retaining device according to Claim 1, characterized in that the magnetized foil (12) is in the shape of a flat narrow disc at least the edge (14) of which is glued or welded to the case of ferromagnetic material (4) containing the magnet (11) implanted in the prosthesis.

3. Device according to Claim 1 or Claim 2, characterized in that the edge of the magnetized foil (12) is welded by a heatless metal-to-metal weld.

4. Device according to one of Claims 1 to 3, characterized in that the imperviousness is achieved by means of an impervious component (gasket 16, glue 18, resin 17, weld 19) situated between the edge (37, 22) of the magnetized foil and the ferromagnetic cap (9) containing the magnet (11) so as to be entirely within the material (8) which is impervious in relation to saliva and which contains the magnet (11) and its ferromagnetic case (9).

5. Magnetic retaining device according to Claim 1, characterized in that the magnetized foil (12) forms the base of a cupel which, is pressed around the main magnet (11) and inside its ferromagnetic case (9).

6. Magnetic retaining device according to Claim 1, characterized in that the magnetized foil (12) is retained inside the ferromagnetic case (9) containing the magnet (11) by a centripetal shoulder (25) of this rase (9).

7. Device according to Claim 1, characterized in that the centripetal shoulder (25) is a crimping.

8. Device according to Claim 7, characterized in that the centripetal shoulder (25) is preformed, and in that the ferromagnetic case (9) consists of a collar (91, 93) and a sealing cover (92, 94).

FIG_1

FIG_2

FIG.3

FIG.4

FIG.5

FIG.6

EP 0 261 041 B1

FIG.7

FIG.8

FIG.9

FIG.10

FIG.11

FIG.12

FIG.13

FIG.14